# EUROPÄISCHE PATENTSCHRIFT

(11) **EP 1 346 812 B1**
(45) Veröffentlichungstag und Bekanntmachung des Hinweises auf die Patenterteilung: **17.08.2011**
(21) Anmeldenummer: 03005884.6
(22) Anmeldetag: 15.03.2003
(51) Int. Cl.: B29C 45/76

(54) **Verfahren und Vorrichtung zur energieorientierten Optimierung von zyklisch ablaufenden Maschinenprozessen**
Process and device for an energy oriented optimization of cyclic machine processes
Procédé et dispositif d'optimisation énergétique de processus machinal cycliques

(30) Priorität: 16.03.2002 DE 10211855
(43) Veröffentlichungstag der Anmeldung: 24.09.2003
(73) Patentinhaber: Keinath, Renate, 72336 Balingen (DE)
(72) Erfinder: Keinath, Renate, 72336 Balingen (DE)
(74) Vertreter: Reinhardt, Harry

(56) Entgegenhaltungen:
- EP-A- 0 487 817
- EP-A- 1 020 279
- DE-A- 3 043 369
- ROSATO, V.D.: "Injection Molding Handbook" 2000 , KLUWER ACADEMIC PUBLISHERS , NORWELL, MASSACHUSETTS, USA XP002246075 ISBN 0-7923-8619-1 * Seite 50; Abbildung 2.23 *
- JOHANNABER F., MICHAELI W.: "Handbuch Spritzgiessen" 13. November 2001 (2001-11-13) , CARL-HANSER VERLAG , MÜNCHEN XP002246076 * Seite 937, Zeile 10 - Zeile 15; Abbildung 7.177 *

## Beschreibung

Die Erfindung betrifft ein Verfahren zur energieorientierten Optimierung von zyklisch ablaufenden Maschinenprozessen, insbesondere von Spritzgießprozessen auf Spritzgießmaschinen zur Verarbeitung von Kunststoffen und anderen plastifizierbarer Massen nach Anspruch 1 sowie eine Vorrichtung zur Durchführung dieses Verfahrens nach Anspruch 8.

Das Verfahren kann bevorzugt in der kunststoffverarbeitenden und in der metallverarbeitenden Industrie eingesetzt werden, beispielsweise in Verbindung mit Kunststoff- Spritzgießmaschinen, Blasformmaschinen, Druckgussmaschinen, Aluminiumdruckgussmaschinen, in Verbindung mit Pressen oder Schweißapparaten, sofern zyklisch ablaufende Prozesse erfolgen, in denen von Zyklus zu Zyklus über geeignete Sensoren der Energieverbrauch erfaßt wird.

Bei zyklisch arbeitenden Maschinen, insbesondere der kunststoffverarbeitenden Industrie, gibt es bisher keine Möglichkeit, die Parameterwahl, also die Wahl der eingestellten und sich daraus ergebenden Maschinenparameter je Zyklus unter Energiegesichtspunkten zu betrachten bzw. zu untersuchen. Das beste Beispiel ist bei einer Kunststoffspritzgießmaschine das Dosieren des Materials. Die Dosierzeit, in der das Material für den nächsten Einspritzvorgang dosiert wird, ist in der Regel durch eine deutlich längere Abkühlzeit des noch im Werkzeug befindlichen Spritzteils überlagert. Bei Anzeige des Energiebedarfs könnte z.B. durch die Veränderung der Dosiergeschwindigkeit der Energieaufwand positiv beeinflußt werden.

Aus der EP 1 020 279 B1 ist eine Anzeigevorrichtung zur Anzeige des Leistungsverbrauchs von zyklisch arbeitenden Geräten bekannt. Der jeweilige Energieverbrauch einzelner Leistung verbrauchender Elemente, die mit dem Antrieb oder der Steuerung zu tun haben, wird individuell erfasst. Diese Werte werden dann gemeinsam je Zyklus übertragen, so dass eine Zyklusbetrachtung und ein Vergleich verschiedener Zyklen oder abschnittsweise von Zyklusgruppen untereinander insbesondere über Stunden oder Tage möglich ist. Durch diesen Vergleich können Störungen detektiert werden, der Einfluss von Änderungen der Maschineneinstellparameter auf den Energieverbrauch erfasst werden, oder es ist möglich, die durchschnittliche Energie je Zyklus oder je gefertigtem Teil zu bestimmen. Dabei wird der Energieverbrauch der Energie verbrauchenden Elemente oder der Maschine dargestellt und nicht der Energieverbrauch einzelner Teilabschnitte eines Zyklus. Den dortigen Darstellungen sind zwar das Einspritzen, Schließen, Auswerfen, Dosieren, Formschließen und die Düsenanlage zu entnehmen, jedoch den jeweiligen Motoren zugeordnet. Veränderungen an den Maschinenparametem werden an dem Energieverbrauch der Motoren bzw. deren Gesamtenergieverbrauch und Durchschnittsenergieverbrauch verdeutlicht. Eine Zuordnung auf Teilabschnitte, in denen ggf. auch mehrere Antriebseinheiten dem jeweiligen Teilabschnitt zugeordnet werden, erfolgt nicht. Eine Feststellung, welchen Einfluss auf den Energieverbrauch jedoch Veränderungen im Zyklus bewirken, oder gar eine Optimierung einzelner Abschnitte im Zyklus zueinander im Hinblick auf die Energie sind damit nicht möglich.

Aus der EP 0 573 912 B1 ist ein bildschirmgestütztes Verfahren zur interaktiven Steuerung einer Spritzgießmaschine bekannt, das insbesondere dem Einrichter die Möglichkeit gibt, den Spritzzyklus sinnvoll aufzubauen. Die Vorrichtung ist auf Grund eines integrierten Expertenwissens in der Lage, dem Benutzer nur die sinnvollen weiteren Schritte als Auswahl für die Programmierung des Zyklus zur Verfügung zu stellen. Diese Steuerung ist unter dem Markennamen "Selogica" am Markt für die Arburg GmbH + Co. bekannt. Dort wird zwar eine bildschirmgestützte Programmierung des Zyklusablaufs zur Verfügung gestellt, Energiegesichtspunkte haben dort jedoch keinen Eingang gefunden.

Aus der EP 0 784 535 B1 ist ferner ein Verfahren zur Qualitätsregelung von Spritzteilen bekannt. Im Rahmen dieses Verfahrens werden eine Vielzahl von verschiedenen Parametern zyklusweise erFaßt, zergliedert und über Kennzahlenmodelle wird versucht eine Abhängigkeit zwischen Maschineneinstellgröße und Qualitätseigenschaft zu erzielen. Obwohl dort bereits auch Qualitätsmerkmale berücksichtigt werden, die Einfluß auf die Kosten der Spritzteilherstellung haben, werden Energiegesichtspunkte nicht berücksichtigt.

Ausgehend von diesem Stand der Technik liegt der vorliegenden Erfindung die Aufgabe zugrunde, ein Verfahren und eine Vorrichtung zur energieorientierten Optimierung von zyklisch ablaufenden Maschinenprozessen zur Verfügung zu stellen.

Diese Aufgabe wird durch ein Verfahren mit den Merkmalen des Anspruches 1 sowie durch eine Vorrichtung mit den Merkmalen des Anspruchs 8 gelöst.

Änderungen bei der Parameterwahl werden als Änderung im Energieverbrauch erkennbar. Da dem Benutzer gleichzeitig verdeutlicht wird, was die kritischen Abläufe z.B. auch in zeitlicher Hinsicht des Maschinenprozesses sind, kann er seine Parameter wie im Beispiel der Dosierzeit entsprechend beeinflussen und erkennt anhand der energetischen Auswertung auch, welchen Einfluß dies auf den Gesamtprozess hat.

Bei Erfassung und Visualisierung der gesamten zeitabhängigen Zyklus-Leistungskurve als auch der für einzelne Teilabläufe spezifischen Energieverbräuche kann durch Optimierung verschiedener Einstellparameter ein geringerer Energieverbrauch des Prozesses unter Beibehaltung der übrigen Prozessoptima erreicht werdenn Zum Beispiel kann der oben beschriebene Dosierprozess durch Verringern der Solldrehzahl zu einem besseren Wirkungsgrad der Dosierachse führen und somit zu einer geringerer Leistungsaufnahme der Maschine und durch teilweise nichtlineare Zusammenhänge auch zu einer Energieminimierung. Dabei werden bereits gefundene Prozessoptima wie Produktivität oder Teilequalität nicht beeinflusst.

Vorzugsweise können die einzelnen Energieverbrauchssektoren auf den Zyklus bezogen dargestellt werden. Dadurch ist der direkte Zusammenhang der einzelnen Ablaufschritte mit dem jeweiligen Energieverbrauch für den Benutzer visuell erkennbar.

Ferner wird der Benutzer vorzugsweise dadurch weiter unterstützt, dass neben der Absolutanzeige graphisch oder numerisch auch eine Tendenzanzeige in den einzelnen Zyklusschritten erfolgt, wodurch eine Veränderung z.B. während der Einlaufphase ebenso zu erkennen ist wie vom Benutzer auf Grund der Energiebetrachtung vorgenommene Änderungen an den Maschinenparametern.

Weitere Vorteile ergeben sich aus den Unteransprüchen.

Im Folgenden wird die Erfindung anhand der beigefügten Figuren näher erläutert. Es zeigen:
- Fig. 1: Ein Blockschaubild einer Spritzgießmaschine, nämlich einer Kunststoffspritzgießmaschine,
- Fig. 2: eine Bildschirmansicht mit einem die Energie angebenden graphischen Verlauf über die Zeit eines Zyklus mit zugeordneten Symbolen,
- Fig. 3: eine Bildschirmansicht mit Teilabschnittweisen Balkendiagrammen,
- Fig. 4: die Meßeinrichtung an strombetriebenen Verbrauchern,

Das Verfahren und die Vorrichtung werden im Folgenden an Hand einer Spritzgießmaschine, vorzugsweise einer Spritzgießmaschine zur Verarbeitung von Kunststoffen und anderer plastifizierbarer Massen wie pulvrigen oder keramischen Massen erläutert. Das Verfahren läßt sich jedoch, wie eingangs bereits erläutert, in anderen Bereichen einsetzen, in denen zyklisch ablaufende Prozesse zur Herstellung (Urformung) oder Bearbeitung (Umformung) von Produkten eingesetzt werden.

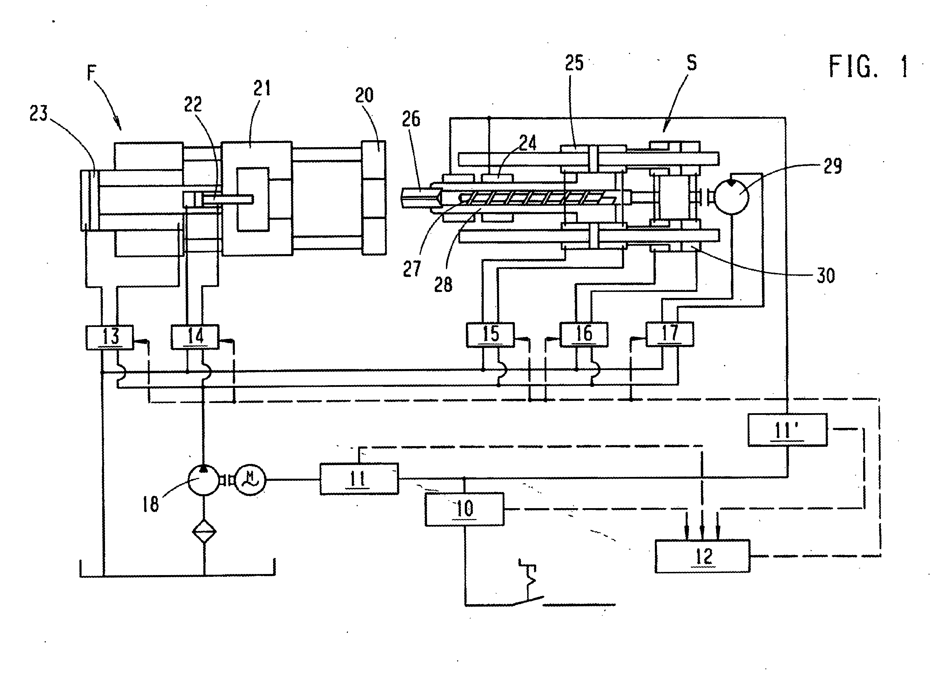

Figur 1 zeigt ein Blockschaltbild einer Kunststoffspritzgießmaschine, wobei links oben die Formschließeinheit F und rechts oben die Spritzgießeinheit S dargestellt ist. Fig. 1 zeigt eine vollhydraulische Spritzgießmaschine, jedoch können Teile der hydraulischen Verbraucher oder alle Antriebe durch elektrische Antriebe ersetzt werden. Ohnehin ist das Verfahren unabhängig von den jeweils eingesetzten Antriebssystemen der einzelnen Achsen zu sehen. So kann sowohl in einer vollhydraulischen Maschine die abschnittsweise benötigte Energie erfasst werden, indem gemäß Figur 1 mit einem an sich bekannten Effektivleistungsmessgerät 10 direkt nach dem Hauptschalter der Maschine in der z.B. mehrphasigen Zuleitung die gesamte Leistungsaufnahme gemessen wird. Ebenso kann auch differenziert nach Verbrauchern gemessen werden, z.B. wiederum mit zusätzlichen Leistungsmessern, oder bei reinen Ohmschen Verbrauchern wie einer Heizung durch Aufzeichnen der Einschaltzeit und Errechnen der Effektivleistung aus Netzspannung und bekanntem Heizwiderstand oder bei servoelektrischen Antrieben durch Aufzeichnen der effektiven Antriebsleistung aus dem Servoumrichter.

Fig. 1 zeigt einen Leistungsmesser 11 für den hydraulischen Antriebsmotor (hier: Pumpe 18) und einen Leistungsmesser 11' für das Heizelement 24. Die ermittelten Werte werden z.B. der Steuerung 12 übermittelt. Je differenzierter die Leistungsmessung erfolgt, desto besser wird die Energieoptimierung. Generell sollten zyklische Verbraucher, wie sie z.B. entlang der Bewegungsachsen der Maschine benötigt werden und azyklische Grundverbraucher wie z.B. die Heizung in der Leistungsaufnahme vorteilhaft getrennt erfasst und gemessen werden, um die Optimierungsaufgabe erfolgreicher erfüllen zu können.

Aufbau und Arbeitsweise einer derartigen Kunststoff- Spritzgießmaschine wird an Hand von Figur 1 unter Bezug auf einen üblichen Spritzzyklus erläutert. Ausgehend vom Ausgangszustand wird zunächst die Schließeinheit 23 betätigt, um die zwischen stationärem Formträger 20 und beweglichem Formträger 21 üblicherweise aufgenommene, zeichnerisch nicht dargestellt Spritzgießform zu schließen. Hierzu wird von der Steuerung 12 das Ventil 13 angesteuert. Ist die Form geschlossen, wird von der Formschließeinheit F der Zuhaltedruck aufgebracht, während gleichzeitig plastifiziertes Material aus dem Plastifizierzylinder 28 durch eine Axialbewegung der Förderschnecke 27 durch die Düse 26 in den Formhohlraum der Spritzgießform eingespritzt wird. Hierzu steuert die Steuerung 12 das Ventil 16 zur Betätigung der Einspritzeinheit 30 an. Das hierfür benötigte Hydraulikmedium wird über die Pumpe 18 zur Verfügung gestellt. Ist der Formhohlraum gefüllt, wird ein Nachdruck von der Spritzgießeinheit S in Verbindung mit der Formschließeinheit F unter Aufrechterhaltung des Zuhaltedrucks aufgebaut, bis das Formteil sich verfestigt hat.

In dieser Zeit kann durch den Dosiermotor 29 mittels der Förderschnecke 27 bereits das Material für den nächsten Spritzzyklus dosiert werden. Der Dosiermotor 29 wird über das Ventil 17 angesteuert. Um das zugeführte Material zu plastifizieren, wird dem Plastifizierzylinder 28 entlang seiner Länge über Heizelemente 24 Wärme zugeführt, die über den Leistungsmesser 11' erfasst werden kann. Während des Dosierens kann das noch im Formwerkzeug befindliche Spritzteil gekühlt werden. Anschließend wird das Werkzeug mittels der Schließeinheit 23 unter Einsatz des Ventils 13 geöffnet und das Spritzteil mittels des Ausstoßers 22 unter Einsatz des Ventils 14 ausgestoßen. Anschließend kann der nächste Zyklus beginnen. Zur Bewegung der Spritzgießeinheit S an die Spritzgießform ist ein Fahrzylinder 25 vorgesehen, der über Ventil 15 ansteuerbar ist.

Das Verfahren soll eine manuelle als auch automatische Energieverbrauchsoptimierung der Maschine ermöglichen. Hierzu wird bei gegebenen Prozesseinstellgrößen und Istwerten zusätzlich an der Maschine eine mehr oder minder differenzierte Effektivwert-Leistungsmessung (in der Zuleitung oder getrennt nach einzelnen Verbrauchergruppen) in Echtzeit während des laufenden zyklischen Prozesses an der Maschine durchgeführt und deren Ergebnisse der Steuerung 12 zur weiteren Verarbeitung über eine analoge oder digitale Schnittstelle zur Verfügung gestellt. Die Maschinensteuerung stellt dem optimierenden Bediener z.B. zuerst in grafischer Form diese Leistungskurve mit allen Möglichkeiten wie Referenzwertbildung, Mittelwertbildung, Toleranzkurvenbildung und dergleichen zur Verfügung, wie es für eine grafische Istwertdarstellüng und -verarbeitung Stand der Technik sind. Gleichzeitig wird in der Darstellung automatisch die abschnittsweise Zyklusunterteilung in Teilabschnitte mittels symbolischer oder sonstiger grafischer Markierung der Leistungskurvenabschnitte eingeblendet.

Damit hat der Bediener bereits ein wirksames visuelles Werkzeug in der Hand, um von Zyklus zu Zyklus durch Einstellparameteränderungen die permanent aufgezeichnete Leistungskurve der Maschine zu beeinflussen und zu optimieren. Als Beispiel sei die bereits angesprochene Parameteränderüng der Dosierdrehzahl genannt.

Viele Einstellparameter beeinflussen die Leistungsaufnahme der Maschine, wobei eine reine Optimierung der Leistungskurve nicht unmittelbar und unbedingt zu einem minimierten Energieverbrauch führen muss, da der Energieverbrauch das Integral über die Leistungskurve ist und durch das oben gezeigte Beispiel ja durchaus auch der eigentliche Teilabschnitt des Zyklus durch die Parametervariation verlängert werden kann. Deshalb wird in einem weiteren Schritt die Energieauswertung der Kurve abschnittsweise ausgewertet als Integral über Leistungsabschnitte bezogen auf Teilabläufe des Zyklus.

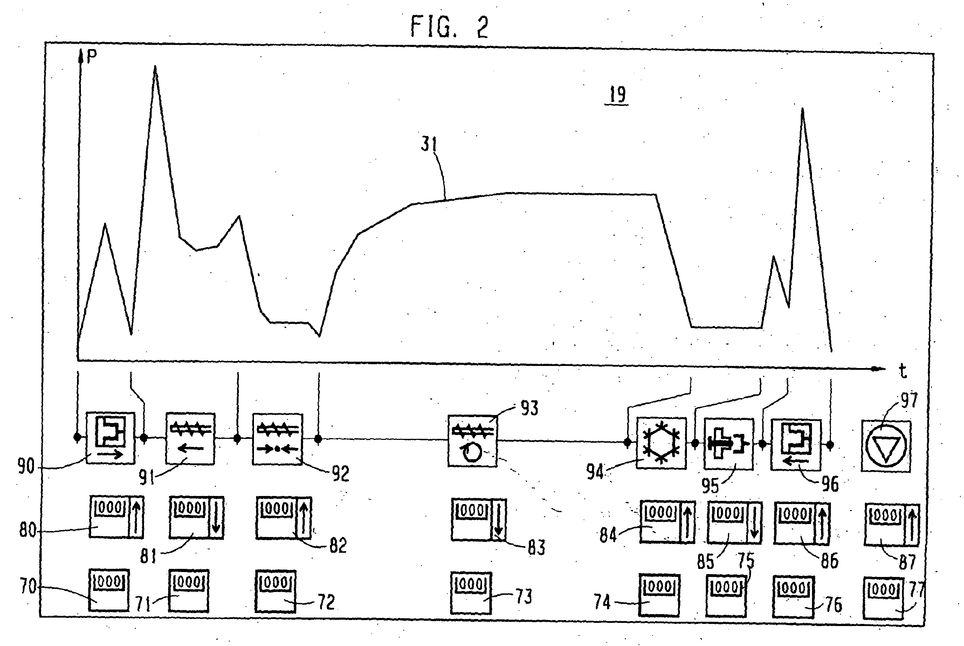

Vervollständigt man die Darstellung des abschnittsweisen Energieverbrauchs noch mit einer abschnittsweisen Tendenz- oder Trendanzeige 80 ... 87 wie in Fig. 2 dargestellt, erhält der Maschinenbediener ein Bedienhilfsmittel, um den zyklischen Produktionsprozess in seinem energetischen Optimum einzustellen und somit die effektiven Produktionskosten und Umwelteinflüsse größtmöglich zu minimieren. .

Ein weiterer Vorteil bei bereits erfolgter Optimierung des Zyklus nach minimalem Energieverbrauch bei Messung der zeitkontinuierlichen Leistungsaufnahme ist die Möglichkeit, die Maschinenbauteile und hier insbesondere die Bewegungsachsen der Maschine wie z.B. Werkzeug Schließen, Einspritzen, Düse fahren und Dosieren auf äußere Einflüsse auf den Prozess wie z.B. Materialschwankungen oder auf schleichenden Verschleiß von Bauteilen durch eine Toleranzüberwachung der Leistungskurve bzw. -kurven - wenn differenziert - zu überwachen. Diese Kurve als auch die abschnittsweise gebildeten Energieintegrale zeigen bei optimalem Energiebetriebspunkt mit große Empfindlichkeit solche Defekte auf, so dass hiervon bei lang laufenden Produktionslosen durchaus eine Maschinenfähigkeitsanalyse oder ein vorbeugender Wartungseinsatz abgeleitet werden kann.

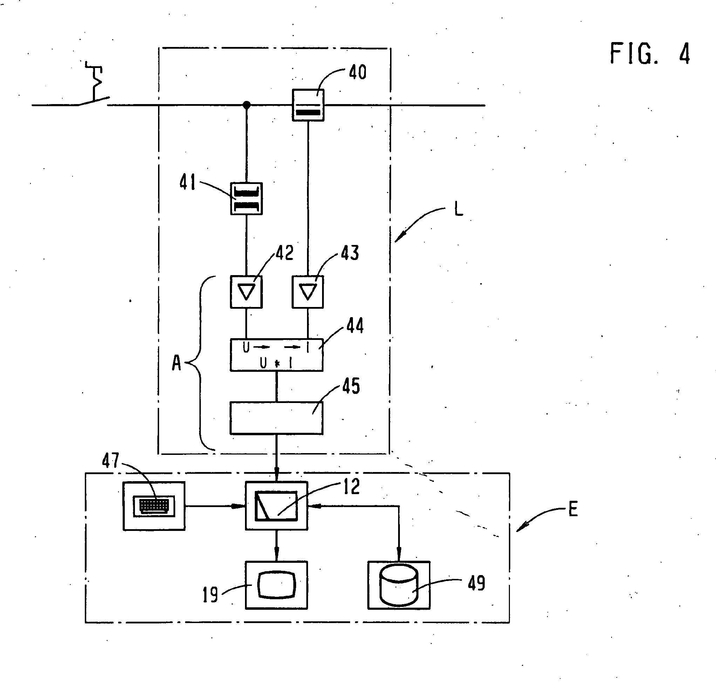

Zur energieorientierten Optimierung dieses zyklisch ablaufenden Maschinenprozesses werden zunächst die eingestellten oder sich aus der Einstellung ergebenden Maschinenparameter je Zyklus z.B. mittels Sensoren erfaßt. Bei diesen Sensoren handelt es sich um die an der Maschine ohnehin vorhandenen üblichen Sensoren wie Temperaturfühler, Druckmessgeräte und dergleichen. Ferner sind aus der Steuerung 12 auch die vom Benutzer eingestellten Maschinenparameter als Eingaben bekannt. Ergänzend wird die effektiv benötigte Leistung gemäß den Leistungsmessern 10, 11, 11' ermittelt. Beim Einsatz an elektrischen Maschinen werden vorzugsweise gemäß Fig. 4 Strommesser 40 und Spannungsmesser 41 ergänzend eingesetzt.

Aus den so ermittelten Werten kann der Energieverbrauch mittels einer Auswerteeinheit A bevorzugt aus den Teilabschnitten zyklusweise und/oder für Teilabschnitte des Zyklus ermittelt werden. Eine derartige Auswerteeinheit A ist insbesondere in Figur 4 für die elektrische Erfassung der Energie dargestellt. An der dort schematisch dargestellten Stromleitung ist der Wirkleistungsmesser L angeordnet. Die Signale von Strommesser 40 und Spannungsmesser 41 werden über Verstärker 42, 43 verstärkt. Die so gewonnenen Signale Spannung U und Strom l werden in einem Multiplizierer 44 miteinander multipliziert. Das so gewonnene Produkt wird zur Bestimmung der verbrauchten Energie mittels Integrierer 45 über die Zeit integriert. Diese Energie wird im Summierer 46 zur Gesamtenergie aufaddiert.

Im nächsten Schritt wird die so gewonnene Information der in Fig. 4 schematisch dargestellten Gesamtsteuerung E zur Verfügung gestellt, die diese än eine Anzeigeeinheit 19 zur Anzeige des Energieverbrauchs weitergibt. Damit lassen sich vor allem einander entsprechende Teilabschnitte einzelner Zyklen und damit auch verschiedene Zyklen und insbesondere auch aufeinander folgende Zyklen aus energetischer Sicht unter Berücksichtigung der eingestellten Maschinenparameter vergleichen. Dadurch kann der Benutzer die eingestellten Maschinenparameter energetisch optimieren, da ihm nun der Zusammenhang zwischen den vorgenommenen Änderungen und dem Energieverbrauchs deutlich wird. Der Benutzer kann über Eing'abemittel 47 Einfluß auf die Steuerung 12 nehmen, sofern nicht eine selbsttätige Optimierung der Maschinen-parameter zur Energieoptimierung eingerichtet ist. Der Vergleich verschiedener Zyklen wird durch Vergleichsmittel innerhalb der Gesamtsteuerung E vorgenommen.

Vorzugsweise ist in einem Speichermittel 49 ein Expertenwissen hinterlegt, dass auf Grund der ermittelten Parameter und auf Grund des Energieverbrauchs Vorschläge zur Optimierung des Energieverbrauchs machen kann. Ein Beispiel bei einer Kunststoffspritzgießmaschine wäre wieder das Dosieren des Materials. Die Dosierzeit wird in der Regel durch eine deutlich längere Abkühlzeit im Formwerkzeug überlagert. Bei einer Anzeige der Energie insbesondere über Teile des Spritzzyklusses könnte das Speichermittel 49 über die Anzeigeeinheit 19 dem Benutzer vorschlagen, die Dosiergeschwindigkeit zu verändern bzw. zu verringern, um dadurch die Energie positiv zu beeinflussen.

Zyklen an zyklisch arbeitenden Maschinen sind prozessbedingt meist in mehrere seriell und/oder parallel ablaufende Teilabschnitte aufgeteilt. Daher kann das Verfahren vorzugsweise je Teilabschnitt des Maschinenprozesses durchgeführt werden. Diese Teilabschnitte sind vom Benutzer einzeln oder im Verbund frei wählbar. Um den Benutzer diese Information leicht zugänglich zu machen, können Teilabschnitte des Zyklus auf der Anzeigeeinheit 19 gemäß Fig. 2 als Symbole 91....96, dargeboten werden, wobei die energetische Auswertung ebenfalls teilabschnittweise den Symbolen zugeordnet ist. Fig. 2 zeigt einen entsprechenden Bildschirmausschnitt. Die Symbole 90 bis 96 haben folgende Bedeutung:
- 90: Werkzeug, Schließen
- 91: Einspritzen
- 92: Nachdruck
- 93: Dosieren
- 94: Abkühlen
- 95: Förmteil ausstoßen
- 96: Werkzeug öffnen

Ergänzend ist durch Symbol 97 der Gesamtenergieverbrauch darstellbar. Über den Symbolen ist durch Graph 31 der Energieverbrauch eines Zyklus über der Zeit dargestellt. Die Anzeigen 70 bis 77 zeigen die den jeweiligen Teilen oder dem Gesamtzyklus zugeordneten Absolutwerte des Energieverbrauchs an. Die Darstellung der einzelnen Energieverbrauchssektoren auf den Spritzzyklus bezogen kann somit in den direkten Zusammenhang der einzelnen Ablaufschritte, dargestellt durch die Symbole 90 bis 96 gestellt werden. Eine weitere Möglichkeit und Unterstützung ist in den Tendenzanzeigen 80 bis 87 zu sehen, die neben der Absolutanzeige graphisch oder numerisch die in den einzelnen Zyklusschritten auftretende fortschreitende Entwicklung des Energieverbrauchs anzeigen. Dadurch läßt sich eine Veränderung z.B. während der Einlaufphase ebenso verdeutlichen wie die Folge von durch den Benutzer vorgenommenen Veränderungen.

Ergänzend kann durch das Erfassen und somit Erkennen der Gesamtverbrauchsenergie pro Zyklus bei'gleichzeitiger Kenntnis des Formteilgewichtes eine direkte Berechnung der Energie pro aufbereiteter Kunststoffmasse erfolgen. Damit ist eine direkte Vergleichsmöglichkeit zwischen unterschiedlichen Werkstücken vorhanden, wobei diese Ergebnisse wiederum Eingang in die energetische Optimierung des Designs entsprechender Teile finden können. Dasselbe gilt selbstverständlich auch für andere zyklisch ablaufende Maschinenprozesse, also nicht nur für Kunststoff- Spritzgießmaschinen, wobei nur die jeweiligen Nomenklatur zu ersetzen ist.

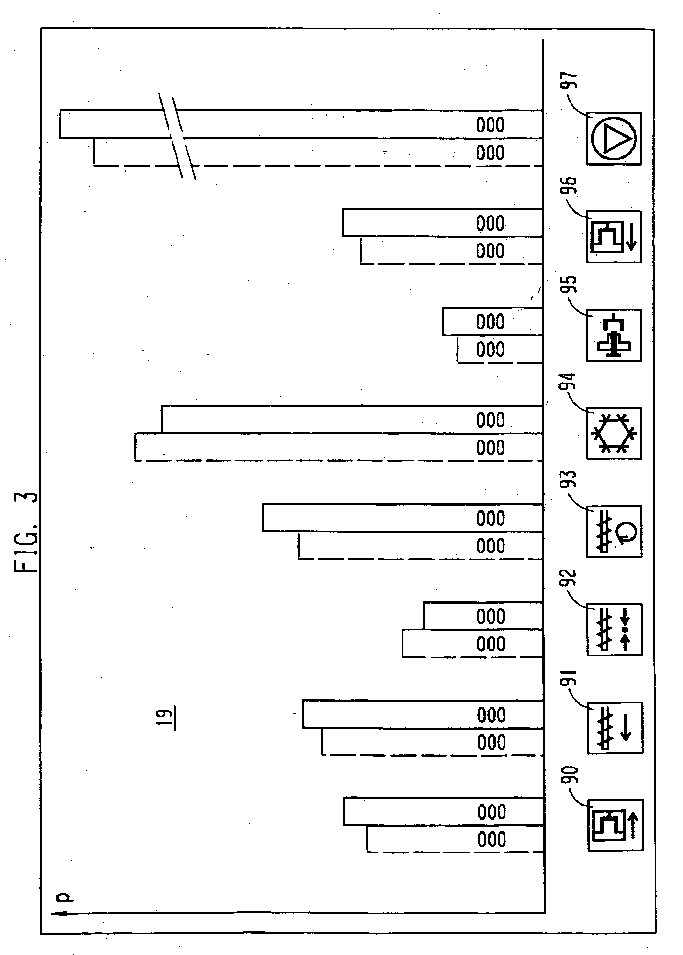

Eine graphische Darstellung kann auch eine Form gemäß Fig. 3 haben, wobei wiederum in der unteren Reihe die Symbole für den Spritzzyklus dargestellt sind, während die einzelnen Zyklen durch Balkendiagramme einander gegenübergestellt sind. In Abhängigkeit der gewonnenen Ergebnisse können manuell oder selbsttätig Stellmittel zur Einstellung optimierter Maschinenparameter vorgesehen werden.

Bei hydraulischen Verbrauchern wird man gemäß Fig. 1 die diesen zugeführte Energie z.B. in Form des für die jeweiligen Verbraucher oder die Maschine insgesamt benötigten Stromverbrauchs messen. Bei elektrischen Verbrauchern oder elektrischen Maschinen wird die Energieerfassung wie bereits erläutert gemäß Fig. 4 erfolgen. An der Bedieneinheit wird vorzugsweise ein manueller Betätigungsknopf vorgesehen sein. Sobald nämlich gerade bei zyklisch arbeitenden Maschinen ein aus Sicht des Bedieners bereits optimaler Spritzzyklus eingestellt ist, kann er diesen Knopf drücken und startet damit die Energieerfassung und -betrachtung.

### Bezugszeichenliste

- 10: Leistungsmesser (gesamt)
- 11: Leistungsmesser
- 11': Leistungsmesser für 24
- 12: Steuerung
- 13-17: Ventile
- 18: Pumpe
- 19: Anzeigeeinheit
- 20: Stationärer Formträger
- 21: Beweglicher Formträger
- 22: Ausstoßer
- 23: Schließeinheit
- 24: Heizelement
- 25: Fahrzylinder
- 26: Düse
- 27: Schnecke
- 28: Plastifizierzylinder
- 29: Dosiermotor
- 30: Einspritzzylinder
- 31: Graph
- 40: Strommesser
- 41: Spannungsmesser
- 42, 43: Verstärker
- 44: Multiplizierer
- 45: Integrierer
- 46: Summierer
- 47: Eingabeeinheit
- 48: Speichermittel
- 70-77: Verbrauchsanzeige
- 80-87: Tendenzanzeige
- 90-96: Symbole
- 97: Summenzeichen
- A: Auswerteeinheit
- E: gesamtsteuerung
- F: Formschließeinheit
- L: Wirkleistungsmesser
- S: Spritzgießeinheit
- V: Verbraucher

## Patentansprüche

1. Verfahren zur energieorientierten Optimierung von zyklisch ablaufenden Maschinenprozessen, insbesondere von Spritzgießprozessen zur Herstellung von Spritzteilen auf einer Spritzgießmaschine zur Verarbeitung von Kunststoffen und anderer plastifizierbarer Massen, mit den Schritten:
- Erfassen der eingestellten und der sich daraus ergebenden Maschinenparameter je Zyklus,
- Messung der effektiv benötigten Leistung mehrerer Antriebseinheiten im Zyklus,
- Bestimmung des Energieverbrauchs der mehreren Antriebseinheiten im Zyklus mittels einer Auswerteeinheit (A),
- Vergleich der ermittelten Werte aus energetischer Sicht unter Berücksichtigung der eingestellten Maschinenparameter,
- Optimierung der eingestellten Maschinenparameter,
**gekennzeichnet durch**
- Messung der effektiv benötigten Leistung für mehrere serielle und/oder parallele Teilabschnitte des Zyklus, wobei die Leistung auch dann den mehreren Teilabschnitten zugeordnet wird, wenn in einem Teilabschnitt mehrere Antriebseinheiten Leistung benötigen,
- Bestimmung des Energieverbrauchs für Teilabschnitte des Zyklus mittels der Auswerteeinheit (A),
- Vergleich einander entsprechender Teilabschnitte verschiedener Zyklen aus energetischer Sicht unter Berücksichtigung der eingestellten Maschinenparameter,
- Optimierung der eingestellten Maschinenparameter hinsichtlich der Teilabschnitte.

2. Verfahren nach Anspruch 1, **dadurch gekennzeichnet, dass** die Verfahrensschritte für einen einzelnen Teilabschnitt oder für mehrere Teilabschnitte des Maschinenprozesses gemeinsam durchgeführt werden.

3. Verfahren nach Anspruch 2, **dadurch gekennzeichnet, dass** wenigstens ein einzelner Teilabschnitt vom Benutzer frei auswählbar ist.

4. Verfahren nach einem der vorhergehenden Ansprüche, **dadurch gekennzeichnet, dass** der Energieverbrauch je Zyklus und/oder Teilabschnitt auf einer Anzeigeeinheit (19) angezeigt wird und dass bedarfsweise die Teilabschnitte des Zyklus auf der Anzeigeeinheit (19) als Symbole (91,....,96) dargestellt sind und die Auswertung teilabschnittweise den Symbolen zugeordnet ist.

5. Verfahren nach einem der vorhergehenden Ansprüche, **dadurch gekennzeichnet, dass** auf einer Tendenzanzeige (80,...,87) die fortschreitende Entwicklung des Energieverbrauchs angezeigt wird.

6. Verfahren nach einem der vorhergehenden Ansprüche, **dadurch gekennzeichnet, dass** ein in einem Speichermittel (49) hinterlegtes Expertenwissen auf Grund der ermittelten Parameter und auf Grund des Energieverbrauchs Vorschläge zur Optimierung des Energieverbrauchs macht.

7. Verfahren nach einem der vorhergehenden Ansprüche, **dadurch gekennzeichnet, dass** das Spritzteilegewicht des im jeweiligen Zyklus gefertigten Spritzteiles dem jeweiligen zugehörigen Energieverbrauch gegenübergestellt wird.

8. Vorrichtung zur energieorientierten Optimierung von zyklisch ablaufenden Maschinenprozessen, insbesondere von Spritzgießprozessen zur Herstellung von Spritzteilen auf einer Spritzgießmaschine zur Verarbeitung von Kunststoffen und anderer plastifizierbarer Massen, mit
- Mitteln zur Erfassung der je Zyklus eingestellten und der sich daraus ergebenden Maschinenparameter,
- Geräten (10, 40, 41) zur Messung der effektiv benötigten Leistung mehrerer Antriebseinheiten über den Zyklus,
- einer Auswerteeinheit (A) zur Bestimmung des Energieverbrauchs der mehreren Antriebseinheiten im Zyklus,
- Vergleichsmitteln (50) zum Vergleich des Energieverbrauchs aus energetischer Sicht unter Berücksichtigung der eingestellten Maschinenparameter,
- Stellmitteln zur Einstellung von auf Grund des Vergleichs optimierter Maschinenparametern,
**dadurch gekennzeichnet, dass**
- die Geräte (10, 40, 41) zur Messung der effektiv benötigten Leistung über den Zyklus und über mehrere serielle und/oder parallele Teilabschnitte des Zyklus vorgesehen sind, wobei die Leistung auch dann den mehreren Teilabschnitten zugeordnet wird, wenn in einem Teilabschnitt mehrere Antriebseinheiten Leistung benötigen,
- die Auswerteeinheit (A) zur Bestimmung des Energieverbrauchs für Zyklus und Teilabschnitte des Zyklus vorgesehen ist,
- die Vergleichsmittel (50) zum Vergleich des Energieverbrauchs einander entsprechender Teilabschnitte verschiedener Zyklen vorgesehen sind, und
- die Stellmittel zur Einstellung von auf Grund des Vergleichs hinsichtlich der Teilabschnitte optimierten Maschinenparametern vorgesehen sind.

9. Vorrichtung nach Anspruch 8, **dadurch gekennzeichnet, dass** die Sensoren und die weiteren Sensoren bei Vorhandensein elektrischer Verbraucher Strommesser (40) und Spannungsmesser (41) umfassen und dass bei Vorhandensein wenigstens eines hydraulischen Verbrauchers die diesem zugeführte Energie in Form des für den jeweiligen Verbraucher oder die Maschine benötigten Stromverbrauchs gemessen wird.

10. Vorrichtung nach Anspruch 8 oder 9, **dadurch gekennzeichnet, dass** eine Tendenzanzeige (80,..., 87) vorgesehen ist, die auf Grund des Ergebnisses der Vergleichsmittel (50) die Entwicklungstendenz des Energieverbrauchs anzeigt.

11. Vorrichtung nach einem der Ansprüche 8 bis 10 **dadurch gekennzeichnet, dass** eine Anzeigeeinheit (19) zur Anzeige des Energieverbrauchs je Teilabschnitt des Zyklus und ggf. je Zyklus und zur Anzeige der Vergleichsergebnisse vorgesehen ist.

12. Vorrichtung nach einem der Ansprüche 8 bis 11 **dadurch gekennzeichnet, dass** Symbole (91,....,96) zur Darstellung der Teilabschnitte des Zyklus auf der Anzeigeeinheit (19) vorgesehen sind und dass der Energieverbrauch teilabschnittweise den Symbolen zugeordnet ist.

## Claims

1. Method for the energy-oriented optimization of cyclic machine processes, in particular injection moulding processes for the production of injection-moulded parts on an injection moulding machine for processing plastics and other plasticizable compounds, comprising the steps:
- recording the set and the resulting machine parameters of each cycle,
- measuring the effectively required power of a plurality of drive units in the cycle,
- determining the energy consumption of the plurality of drive units in the cycle by means of an evaluation unit (A),
- comparing the determined values from an energy point of view, taking account of the set machine parameters,
- optimizing the set machine parameters,
**characterized by**
- measuring the effectively required power for a plurality of serial and/or parallel sub-sections of the cycle, wherein the power is assigned to the plurality of sub-sections even when a plurality of drive units require power in a sub-section,
- determining the energy consumption for sub-sections of the cycle by means of the evaluation unit (A),
- comparing corresponding sub-sections of different cycles from an energy point of view, taking account of the set machine parameters,
- optimizing the set machine parameters with regard to the sub-sections.

2. Method according to claim 1, **characterized in that** the method steps are carried out for one individual sub-section or jointly for a plurality of sub-sections of the machine process.

3. Method according to claim 2, **characterized in that** at least one individual sub-section can be freely selected by the user.

4. Method according to one of the preceding claims, **characterized in that** the energy consumption per cycle and/or sub-section is displayed on a display unit (19), and **in that**, if required, the sub-sections of the cycle are represented as symbols (91, ..., 96) on the display unit (19) and the evaluation is assigned to the symbols sub-section by sub-section.

5. Method according to one of the preceding claims, **characterized in that** the continuing development of the energy consumption is displayed on a trend display (80, ..., 87).

6. Method according to one of the preceding claims, **characterized in that** expert knowledge stored in a memory means (49) makes proposals for optimizing the energy consumption on the basis of the determined parameters and on the basis of the energy consumption.

7. Method according to one of the preceding claims, **characterized in that** the weight of the injection-moulded part manufactured in the respective cycle is compared with the respectively associated energy consumption.

8. Device for the energy-oriented optimization of cyclic machine processes, in particular injection moulding processes for the production of injection-moulded parts on an injection moulding machine for processing plastics and other plasticizable compounds, comprising:
- means for recording the set and the resulting machine parameters of each cycle,
- devices (10, 40, 41) for measuring the effectively required power of a plurality of drive units over the cycle,
- an evaluation unit (A) for determining the energy consumption of the plurality of drive units in the cycle,
- comparison means (50) for comparing the energy consumption from an energy point of view, taking account of the set machine parameters,
- adjusting means for setting machine parameters that are optimized on the basis of the comparison,
**characterized in that**
- the devices (10, 40, 41) are provided for measuring the effectively required power over the cycle and over a plurality of serial and/or parallel sub-sections of the cycle, wherein the power is assigned to the plurality of sub-sections even when a plurality of drive units require power in a sub-section,
- the evaluation unit (A) is provided for determining the energy consumption for the cycle and for sub-sections of the cycle,
- the comparison means (50) are provided for comparing the energy consumption of corresponding sub-sections of different cycles, and
- the adjusting means are provided for setting machine parameters that are optimized on the basis of the comparison with regard to the sub-sections.

9. Device according to claim 8, **characterized in that** the sensors and the further sensors, in the presence of electrical consumers, comprise current meters (40) and voltage meters (41), and **in that**, in the presence of at least one hydraulic consumer, the energy supplied thereto is measured in the form of the current consumption required for the respective consumer or the machine.

10. Device according to claim 8 or 9, **characterized in that** a trend display (80, ..., 87) is provided which displays the development trend of the energy consumption on the basis of the result of the comparison means (50).

11. Device according to one of claims 8 to 10, **characterized in that** a display unit (19) is provided for displaying the energy consumption per sub-section of the cycle and optionally per cycle and for displaying the comparison results.

12. Device according to one of claims 8 to 11, **characterized in that** symbols (91, ..., 96) are provided for representing the sub-sections of the cycle on the display unit (19), and **in that** the energy consumption is assigned to the symbols sub-section by sub-section.

## Revendications

1. Procédé d'optimisation énergétique des processus cycliques d'une machine, en particulier des processus d'injection pour la fabrication de pièces injectées sur une machine à injection pour la réalisation de matières plastiques et d'autres masses plastifiables, comportant les étapes suivantes :
- saisie des paramètres de réglage de la machine et des paramètres de machine en résultant pour chaque cycle,
- mesure de la puissance effectivement nécessaire de plusieurs unités d'actionnement dans le cycle,
- détermination de la consommation d'énergie des plusieurs unités d'actionnement dans le cycle au moyen d'une unité d'exploitation (A),
- comparaison des valeurs déterminées, du point de vue énergétique, en prenant en considération les paramètres de réglage de la machine,
- optimisation des paramètres de réglage de la machine,
**caractérisé par**
- la mesure de la puissance effectivement nécessaire pour plusieurs périodes successives et/ou parallèles du cycle, la puissance étant alors aussi associée aux plusieurs périodes de cycle, lorsque plusieurs unités d'actionnement nécessitent une puissance dans une période de cycle,
- la détermination de la consommation d'énergie pour des périodes du cycle au moyen de l'unité d'exploitation (A),
- la comparaison de périodes correspondant les unes aux autres de cycles différents, du point de vue énergétique, en prenant en considération les paramètres de réglage de la machine,
- l'optimisation des paramètres de réglage de la machine pour les périodes.

2. Procédé selon la revendication 1, **caractérisé en ce que** les étapes de procédé pour une seule période ou pour plusieurs périodes du processus de la machine sont exécutées ensemble.

3. Procédé selon la revendication 2, **caractérisé en ce qu'**au moins une seule période peut être sélectionnée librement par l'utilisateur.

4. Procédé selon l'une des revendications précédentes, **caractérisé en ce que** la consommation d'énergie pour chaque cycle et/ou période est affichée sur une unité d'affichage (19) et **en ce que**, si nécessaire, les périodes du cycle sont représentées sur l'unité d'affichage (19) en tant que symboles (91,...,96) et l'exploitation est associée périodiquement aux symboles.

5. Procédé selon l'une des revendications précédentes, **caractérisé en ce que** l'évolution de la consommation d'énergie est affichée sur un dispositif d'affichage de tendance (80,...,87).

6. Procédé selon l'une des revendications précédentes, **caractérisé en ce qu'**un savoir d'expert emmagasiné dans un moyen de stockage (49) effectue des propositions pour l'optimisation de la consommation d'énergie sur la base des paramètres déterminés et sur la base de la consommation d'énergie.

7. Procédé selon l'une des revendications précédentes, **caractérisé en ce que** le poids de la pièce injectée achevée dans chaque cycle est indiqué en relation avec la consommation d'énergie correspondante.

8. Dispositif pour l'optimisation énergétique de processus cycliques d'une machine, en particulier de processus d'injection pour la fabrication de pièces injectées sur une machine d'injection pour la réalisation de matières plastiques et d'autres masses plastifiables, comportant
- des moyens de saisie des paramètres de réglage de la machine et des paramètres en résultant pour chaque cycle,
- des appareils (10,40,41) pour la mesure de la puissance effectivement nécessaire de plusieurs unités d'actionnement au cours du cycle,
- une unité d'exploitation (A) pour la détermination de la consommation d'énergie des plusieurs unités d'actionnement dans le cycle,
- des moyens de comparaison (50) pour la comparaison de la consommation d'énergie du point de vue énergétique, en prenant en considération les paramètres de réglage de la machine,
- des moyens de réglage pour régler les paramètres de la machine optimisés sur la base de la comparaison, **caractérisé en ce que**
- les appareils (10,40,41) pour la mesure de la puissance effectivement nécessaire au cours du cycle et au cours de plusieurs périodes successives et/ou parallèles du cycle sont prévus, la puissance étant alors aussi associée aux plusieurs périodes, lorsque dans une période plusieurs unités d'actionnement nécessitent de la puissance,
- l'unité d'exploitation (A) étant prévue pour la détermination de la consommation d'énergie pour le cycle et pour les périodes du cycle,
- les moyens de comparaison (50) pour la comparaison de la consommation d'énergie de périodes correspondant les unes aux autres de cycles différents sont prévus et
- les moyens de réglage sont prévus pour le réglage de paramètres de la machine optimisés sur la base de la comparaison pour les périodes.

9. Dispositif selon la revendication 8, **caractérisé en ce que** les capteurs et les autres capteurs comprennent, en cas de présence de consommateurs d'électricité, un ampèremètre (40) et un voltmètre (41) et **en ce qu'**en cas de présence d'au moins un consommateur hydraulique, l'énergie fournie à ce dernier est mesurée sous la forme de la consommation de courant nécessaire pour le consommateur correspondant ou pour la machine.

10. Dispositif selon la revendication 8 ou 9, **caractérisé en ce qu'**un dispositif d'affichage de tendance (80,...,87) est prévu et affiche la tendance d'évolution de la consommation de l'énergie sur la base du résultat des moyens de comparaison (50).

11. Dispositif selon l'une des revendications 8 à 10, **caractérisé en ce que** l'unité d'affichage (19) est prévue pour l'affichage de la consommation d'énergie de chaque période du cycle et éventuellement de chaque cycle et pour l'affichage des résultats de la comparaison.

12. Dispositif selon l'une des revendications 8 à 11, **caractérisé en ce que** des symboles (91,...,96) sont prévus pour la représentation des périodes du cycle sur l'unité d'affichage (19) et **en ce que** la consommation d'énergie est associée périodiquement aux symboles.
